# EUROPEAN PATENT APPLICATION

(11) **EP 1 335 255 A2**
(43) Date of publication of application: **13.08.2003**
(21) Application number: 02022541.3
(22) Date of filing: 07.10.2002
(51) Int. Cl.: G05B 19/042

(54) **Method for calibrating a control system**

(30) Priority: 08.02.2002 GB 0202904
(71) Applicant: Delphi Technologies, Inc., Troy, MI 48007 (US)
(72) Inventor: Hofinger, Herbert, 4744 Pétange (LU)
(74) Representative: Beissel, Jean

(57) **Abstract**

A method for calibrating a control system of a heating ventilating and air conditioning system comprises the following steps:
- reading data relating to user preferences from data storage means associated with a first control system of an HVAC system, wherein the data relating to user preferences are stored as a result of user interventions on the HVAC system; and
- transferring basic control data based on said data relating to user preferences into a control system to be calibrated of an HVAC system, said basic control data allowing the operation of said control system in an automatic mode.

## Description

### FIELD OF THE INVENTION

The present invention generally relates to a method for calibrating a control system, in particular for calibrating an adaptive control system of a vehicle heating ventilating and air conditioning system.

### BACKGROUND OF THE INVENTION

Advancement in heating ventilating and air conditioning (HVAC) systems for controlling the climate within a vehicle have lead to electronic control systems that will automatically control the climate within a passenger compartment of a vehicle based on a number of control parameters that affect the climate within the vehicle. The control parameters are calibrated and preprogrammed by a climate control calibration engineer at the manufacturing level of the vehicle, so as to provide a particular comfort level.

In such control systems, an automatic control button allows the vehicle user to put the control system into an automatic mode. In the automatic mode, the control system will attempt to regulate the air delivery and air mixture based on the preprogrammed control parameters. If the vehicle user adjusts the blower speed or any other control button, the control system will be switched out of the automatic mode and will remain at the settings as set by the user.

The goal of such an automatic control system is to provide the most desirable comfort level within the vehicle compartment with a minimal amount of control input by the driver or passengers. In order to set the control parameters that determine the appropriate temperature, blower speed and air distribution mode depending on a wide range of environmental conditions, a calibration engineer sets these control parameters based on field-tests and simulations.

Such calibrations are expensive and time consuming, as a variety of field-tests and simulations are necessary. In addition, it is difficult for calibration engineers to improve their calibration methods since there is no feedback from the end users, i.e. the customers. Therefore, despite the efforts made for calibrating such control systems, the actual methods for calibrating control systems of HVAC systems do not take into account user (i.e. driver and/or passenger) preferences.

This problem of calibration is also encountered with other user-adjustable vehicle equipments, which are operable in automatic mode and can be also manually adjusted by the vehicle user such as e.g. an automatic transmission.

Hence, there is a need for an improved method for calibrating control systems of user-adjustable devices for vehicles.

### SUMMARY OF THE INVENTION

According to the present invention, a method for calibrating a control system of a user-adjustable device for a vehicle comprises the following steps:
(a) reading data relating to user preferences from data storage means associated with a first control system of a user-adjustable device, wherein said data relating to user preferences are stored as a result of user interventions on said user-adjustable device; and
(b) transferring basic control data based on said data relating to user preferences into a control system to be calibrated of a user-adjustable device, said basic control data allowing the operation of said control system in an automatic mode.

Hence, according to the present invention, data relating to user preferences―reflecting driver or passenger interventions on the control system―are stored while the vehicle is being used, and these data are collected to be used for calibration purposes of further control systems. The stored data can be read during a garage stay e.g. via the existing communication bus used to control engine operation. It will be appreciated that collecting these data relating to user preferences provides a detailed knowledge database about how the device operation is perceived by users. From this knowledge database, it is possible to determine basic control data that will be used for the initial calibration of control systems of user-adjustable devices, so that the device can be operated in automatic mode according to these basic control data.

It is to be noted that in order to determine the basic control data, the collected data relating to user preferences may be linked to other data, like vehicle type, geographical location and user type. This should allow vehicle manufacturers to propose a variety of basic control data that are specifically calibrated for a particular climate and/or culture, and that could be installed locally by local dealers and garages.

The data relating to user preferences can be used for the calibration of control systems of new generations of user-adjustable devices. In such a case, it is preferred to have large amounts of data. Accordingly, a multiplicity of data relating to user preferences are read from a multiplicity of data storage means. This allows to set up a database that can be used for future system calibrations without the need to perform lengthy and costly field-tests and calibration runs. Furthermore, the general understanding about driver/passenger preferences and behaviour will be improved. The collected data relating to user preferences are then processed to determine the basic control data that will be transferred into the new generations of user-adjustable devices.

The present method may be implemented in a simple way by providing storage means in a control system and then storing the data relating to user preferences therein following interventions of the users on the control system. In such a case, the data are not used in the control system but stored for the purpose of collecting them to acquire knowledge data about driver and/or passengers preferences.

It will be understood that, in the automatic mode, the control system receives a variety of input signals-corresponding in particular to predetermined vehicle parameters-that are processed to generate an output signal. Therefore, the stored data relating to user preferences shall advantageously include, for each user intervention on the control system, data relating to vehicle parameters at the time of the user intervention and data reflecting the desired result.

However, the present method proves particularly advantageous when implemented on adaptive control systems capable of learning from user interventions. Such an adaptive control system initially operates based on a number of preprogrammed parameters that define the base comfort level in the automatic mode. In function, the system is capable of learning from user interventions so as to operate the device according to user preferences. Hence, the data relating to user preferences shall include learned parameters of the adaptive control system. It is to be noted that such data relating to user preferences correspond to parameters that precisely reflect the operating conditions of the control system as requested by the driver/passengers. The data that are collected have thus been pre-processed in the adaptive control system, and the data processing to determine the basic control data may be easier. Furthermore, collecting these data allows vehicle manufacturers to obtain a great number of calibration data for free, since the calibrations have been carried out by the driver and/or passengers.

In such a case, where data relating to user preferences consist of learned parameters, the data may be directly transferred from one adaptive control system to another adaptive control system for controlling an equivalent device, so that that device will readily operate according to the driver's and/or passengers' preferences. This is of particular interest when replacing a device and its control system in a vehicle. It also allows a customer to change car and have his personal parameters pre-set in the car, thereby creating more brand attachment. Similarly, the data relating to user preferences may be used for training the adaptive control system in a customer's new car, so as to adapt this control system to the customer's preferences.

Regarding more specifically the adaptive control system, it shall preferably include a neural network, whereby the data relating to user preferences shall include neural network parameters. Alternatively, the adaptive control system may include an expert system such as e.g. a fuzzy expert system, in which case the data relating to user preferences shall include expert system parameters.

A particularly interesting field of application of the present method is that of Heating, Ventilating and Air Conditioning (HVAC) systems. Modern HVAC systems are controlled by control systems that can operate in an automatic mode, which is calibrated by engineers at the manufacturing level. By storing user interventions on the control system, it is possible to know with precision the comfort level desired by the user. Other fields of application of the present method are e.g. the control of the automatic transmission or on-board multimedia, or other types of user-adjustable devices.

### DETAILED DESCRIPTION OF A PREFERRED EMBODIMENT

A preferred embodiment of the method according to the present invention will now be described in more detail, by way of example, with reference to the calibration of a control system of an HVAC system.

Up to now, vehicle manufacturers, and suppliers of HVAC systems, did not have suitable means to know the comfort preferences from all drivers and passengers. Therefore the standard comfort level is always an educated guess based on past experience and expensive field tests. The standard comfort level incorporated in today's HVAC systems is therefore an average level without individual (geographical and personal) properties.

The method according to the present invention allows to solve these problems. In the present embodiment, the method is described with reference to an HVAC system equipped with an adaptive comfort control system including a neural network.

Basically, a neural network consists of a number of artificial neural objects, sometimes referred to as nodes or neurons, which receive input data, process that data, and generate an output signal. In such a system, the key to solving a problem lies in the aggregate processing function of the many neurons which form the network.

An important aspect of such a network is that a learning function can be employed to modify the node's input signal weights. To enable an artificial network to solve a given problem, one must teach the neural network by supplying it with known input and known output. During a training process, the neural network learns to generate the correct output (known output) for the stimulus (known input).

In the case of an HVAC system controlled by an adaptive control system with neural network, the control system initially operates in the automatic mode according to initial neural network parameters that are calibrated and programmed at the manufacturing level. A variety of environment sensors are provided to generate input signals indicative of e.g. outside temperature, sun load, relative humidity, in-car temperatures. These input signals are processed by the neural network, which generates output signals to control the HVAC system. User interventions are used to train the neural network, which learns new neural network parameters so that the next time the system encounters the same input signals, it will generate an output signal that will meet the user's preferences. These learned neural network parameters (also called learning matrix or transfer function), which are stored in data storage means, thus represent data relating to user preferences.

In order to improve the initial calibration of HVAC control systems, the present method proposes to collect data relating to user preferences―in this case comprising learned neural network parameters―and then using the collected data to determine a basic set of neural network parameters that will be used in automatic mode. In practice, the data relating to user preferences are stored in data storage means associated with the control system as a result of user intervention on the HVAC system through the control panel. The data are thus read out from this data storage means and processed to determine basic control data that will be used for calibrating other systems.

Indeed, the result of a learning process performed by an adaptive comfort control system is data about the individual preferences of passengers and is thus an exact picture of individual comfort preferences. This data is stored in look-up tables or parameter sets. Collecting this data provides a detailed knowledge base about how comfort is perceived by passengers.

Therefore each car contains one ore more individual system calibrations (in case the HVAC system is capable of controlling separately different zones in the vehicle), calibrated by the passengers for free. This creates the opportunity to fine-tune systems down to the individual vehicle level even for simple systems. Also, additional data like usage statistics linked to comfort can be created by the control system and stored.

The data can be read during a garage stay via the existing communication bus and linked to other data, like vehicle type, geographical location, passenger type. The additional effort is minimal. With this data, a database can be set up providing the base for future system calibrations without the need to perform lengthy and costly field tests and calibration runs. Also, the general understanding about comfort will be improved with marginal additional cost.

With the additional data "segmented" comfort calibrations can be set up like for instance different calibrations for different climates and cultures. These pre-set semi-individual comfort levels can be installed locally by the garage.

To build a large knowledge database of individual comfort, data relating to user preferences are preferably read out from a multiplicity of data storage means associated with control systems. In the context of neural networks capable of learning, the whole set of nodes is also called learning matrix or transfer function.

These learning matrixes shall thus be read out from a multiplicity of adaptive control systems associated with HVAC systems and then fed individually into simulators (either at the garage or at the manufacturer's) to analyse the system response at key points. The results of these simulations shall be processed statistically for knowledge purposes, and new general system responses defined. These new general system responses can then be used to determine the basic control data (i.e. the new basic transfer function or learning matrix) that will be used in the adaptive control systems of future generations of HVAC systems.

## Claims

1. A method for calibrating a control system of a user-adjustable device for a vehicle, comprising the following steps:
(a) reading data relating to user preferences from data storage means associated with a first control system of a user-adjustable device, wherein said data relating to user preferences are stored as a result of user interventions on said user-adjustable device; and
(b) transferring basic control data based on said data relating to user preferences into a control system to be calibrated of a user-adjustable device, said basic control data allowing the operation of said control system in an automatic mode.

2. The method according to claim 1, wherein
at step (a), a multiplicity of data relating to user preferences are read out from a multiplicity of data storage means associated with a respective control system; and
said multiplicity of data relating to user preferences are processed to determine said basic control data.

3. The method according to claim 1 or 2, wherein
said control system receives input signals corresponding to predetermined vehicle parameters; and
said data relating to user preferences include user interventions and corresponding input signals.

4. The method according to any one of the preceding claims, wherein said control system is an adaptive control system capable of learning from user interventions, and wherein said data relating to user preferences comprise learned parameters of said adaptive control system.

5. The method according to claim 4, wherein said adaptive control system comprises a neural network unit, and said data relating to user preferences include learned neural network parameters.

6. The method according to claim 4, wherein said adaptive control system comprises an expert system and said data relating to user preferences include learned expert system parameters.

7. The method according to any one of the preceding claims, wherein said user-adjustable device is one of a heating ventilating and air conditioning system, an automatic transmission system, and a multimedia system.
